# EUROPEAN PATENT APPLICATION

(11) **EP 2 444 222 A2**
(43) Date of publication of application: **25.04.2012**
(21) Application number: 11171101.6
(22) Date of filing: 22.06.2011
(51) Int. Cl.: B29C 45/32, B29C 45/40

(54) **Ejection device for a mold and injection molding machine using the same**

(30) Priority: 25.10.2010 CN 201010517892
(71) Applicant: Hong Fu Jin Precision Industry (ShenZhen) Co., Ltd., Longhua Town, Bao'an District Shenzhen City Guangdong 518109 (CN); Hon Hai Precision Co., Ltd, Tu-cheng City, Taipei Hsien Taiwan, ROC (CN)
(72) Inventor: Chen, Mi-Chien, Taipei Hsien (TW); Kuo, Shien-Cheng, Taipei Hsien (TW); Chen, Gang, 518109 Shenzhen City (CN)
(74) Representative: Wilson, Peter

(57) **Abstract**

A mold ejection device (25) includes a main body (251), at least one first ejection mechanism (252) and at least one second ejection mechanism (253). The main body includes one first receiving recess (2512) and one second receiving recess (2514) defined in two opposite surfaces of the main body, respectfully. The first ejection mechanism is assembled and received within the first receiving recess. The first ejection mechanism includes a first piston (2524) slidably assembled within the first receiving recess and a first ejector (2525) fixed to the first piston. A distal end of the first ejector faces toward and slidably passes through the first surface. The second ejection mechanism has substantially the same structure as the first ejection mechanism and is slidably assembled and received within the second receiving recess. An injection molding machine (200) using the mold ejection device is also provided.

## Description

### 1. Technical Field

The present disclosure relates to mold ejection devices, and particularly, to a mold ejection device and an injection molding machine using the mold ejection device.

### 2. Background

Many injection molding machines include a male die, a female die, and a mold ejection device mounted to the male die. The mold ejection device is used for ejecting a product after the product is injection molded. However, existing injection molds can only mold one product at a time, which is inefficient.

Therefore, there is room for improvement in the art.

### BRIEF DESCRIPTION OF THE DRAWINGS

Many aspects of the disclosure can be better understood with reference to the following drawings. The components in the drawings are not necessarily drawn to scale, the emphasis instead being placed upon clearly illustrating the principles of the mold ejection device and the injection molding machine using the same. Moreover, in the drawings like reference numerals designate corresponding parts throughout the several views. Wherever possible, the same reference numerals are used throughout the drawings to refer to the same or like elements of an embodiment.

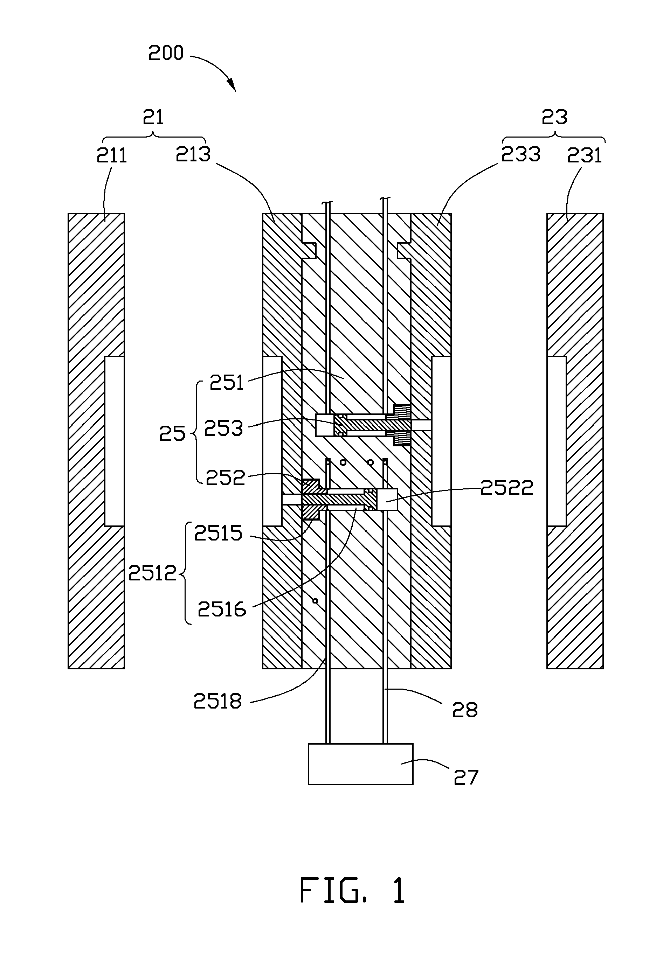

FIG. 1 shows a cross sectional view of an embodiment of an injection molding machine in an mold opening state, the injection molding machine including a first mold assembly, a second mold assembly, and a mold ejection device.

FIG. 2 shows an isometric view of the mold ejection device of the injection molding machine of FIG. 1.

FIG. 3 shows an exploded isometric view of the mold ejection device of FIG. 2.

FIG. 4 is similar to FIG.3, but viewed from another aspect.

FIG. 5 shows a cross sectional view of the injection molding machine closed and ready for injection.

### DETAILED DESCRIPTION

Referring to FIG, 1, an embodiment of an injection molding machine 200 includes a first mold assembly 21, a second mold assembly 23, a mold ejection device 25, and an oil pump 27 to provide oil under pressure. The mold ejection device 25 is assembled and sandwiched between the first and second mold assemblies 21, 23 for ejecting molded products from the first and second mold assemblies 21, 23. The oil pump 27 is connected to the mold ejection device 25 for providing oil pressure to control the mold ejection device 25 to operate. In the illustrated embodiment, the injection molding machine 200 can be applied to a double shot injection molding machine or a double colored plastic injection machine. The first mold assembly 21 and the second mold assembly 23 can be respectively used for injection molding of two different products.

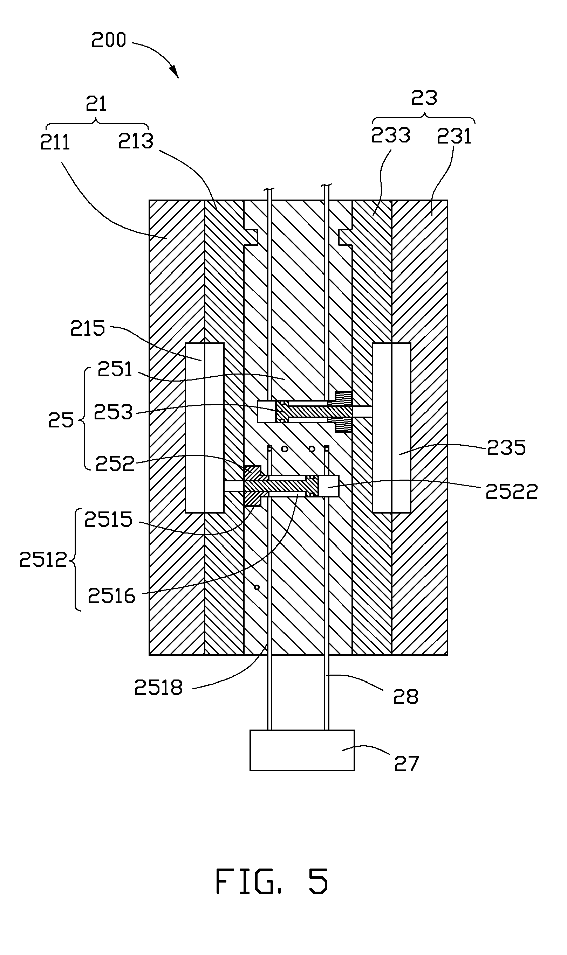

The first mold assembly 21 includes a moving mold 211 and a fixed mold 213 that form a mold cavity 215 (shown in FIG. 5) when put together. The second mold assembly 23 has substantially the same structure as the first mold assembly 21, but may have a different shape for molding a different-shaped product from the product molded in the first mold assembly 21. The second mold assembly 23 also includes a moving mold 231 and a fixed mold 233 that form a mold cavity 235 (shown in FIG. 5) when put together.

The mold ejection device 25 includes a main body 251, at least one first ejection mechanism 252, and at least one second ejection mechanism 253. The main body 251 has a first surface 2511 and a second surface 2513 opposite to the first surface 2511. The first surface 2511 is configured for mounting the fixed mold 213 of the first mold assembly 21. At least one first receiving recess 2512 is defined in the first surface 2511 of the main body 251 to assemble and receive the corresponding at least one first ejection mechanism 252. The second surface 2513 is configured to mount the fixed mold 233 of the second mold assembly 23. At least one second receiving recess 2514 is defined in the second surface 2513 of the main body 251 to assemble and receive the corresponding at least one second ejection mechanism 253. A plurality of pipes 2518 are arranged within the main body 251 to communicate with the first and second receiving recesses 2512, 2514, such that the oil pump 27 can be connected to the first and second receiving recesses 2512, 2514 by means of a plurality of oil pipes 28 for supplying oil under pressure to the first and second ejection mechanisms 252, 253 to control the mold ejection device 25.

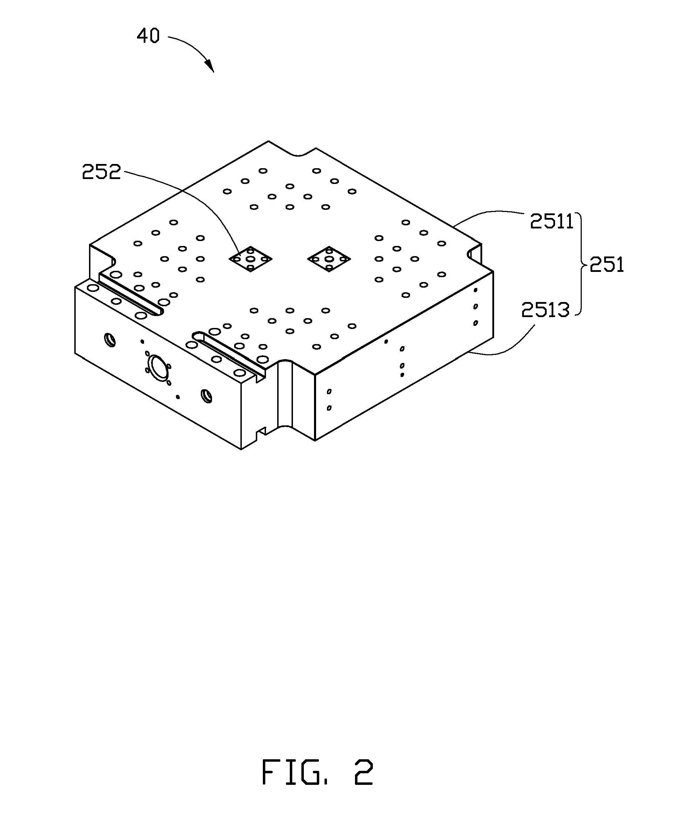

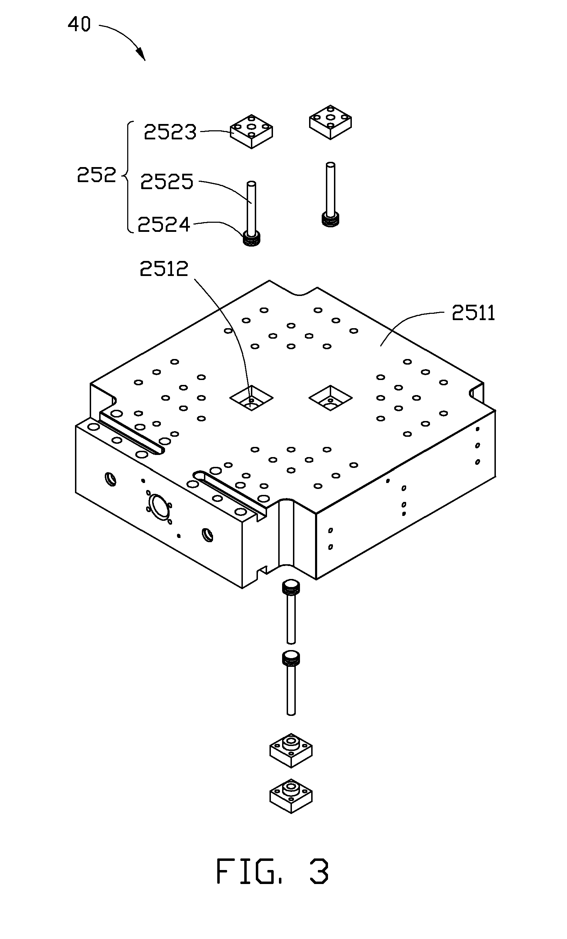

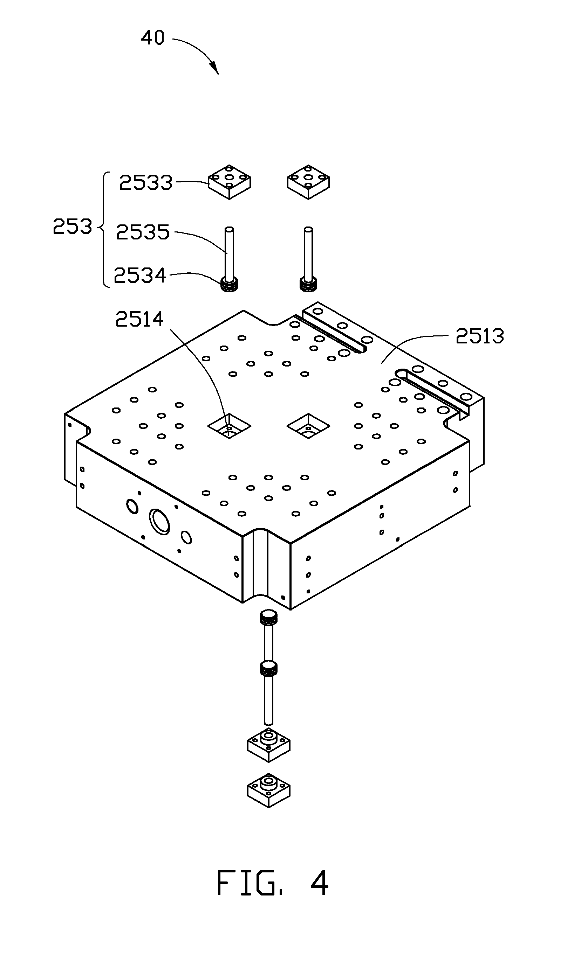

Also referring to FIG. 2 through FIG. 4, in the illustrated embodiment, there are two first receiving recesses 2512 and two second receiving recesses 2514 respectively defined in the first and second surfaces 2511, 2513 of the main body 251. Correspondingly, there are two first ejection mechanisms 252 and two second ejection mechanisms 253 respectively slidably assembled within the corresponding two first receiving recesses 2512 and the two second receiving recesses 2514. Each first receiving recess 2512 can be substantially a stepped receiving hole defined in the first surface 2511 of the main body 251, and includes a substantially rectangular mounting hole 2515 recessed from the first surface 2511 and a cylindrical receiving hole 2516 coaxially communicating with the mounting hole 2515, and the cylindrical receiving hole 2516 is disposed between the mounting hole 2515 and the second surface 2513. The second receiving recess 2514 has substantially the same shape as the first receiving recess 2512, and is defined in the second surface 2513 of the main body 251. The plurality of pipes 2518 in the illustrated embodiment are arranged within the main body 251. One end of each pipe 2518 is respectively connected with the corresponding receiving holes of the first and second receiving recesses 2512, 2514, and the other end of each pipe 2518 is disposed at two side walls or the periphery of the main body 251 for connecting with the oil pipes 28.

The first ejection mechanism 252 includes a first sealing element 2523, a first piston 2524, and a first ejector 2525. The first sealing element 2523 is substantially a rectangular block in the illustrated embodiment. The first sealing element 2523 is hermetically assembled within the corresponding mounting hole 2515 of one first receiving recess 2512, thereby forming a first seal cavity 2522 within the first receiving recess 2512. The first piston 2524 is slidably assembled within the first seal cavity 2522 along an axial direction of the receiving hole 2516. The first ejector 2525 is substantially a cylindrical post with one end thereof fixed to the first piston 2524. The opposite other end of the first ejector 2525 faces the first surface 2511 and slidably passes through the first sealing element 2523 for ejecting the corresponding molded product formed in the first mold assembly 21. The second ejection mechanism 253 has substantially the same structure as the first ejection mechanism 252. The two second ejection mechanisms 253 are assembled within the corresponding two second receiving recesses 2514 of the main body 251. Each second ejection mechanism 253 includes a second sealing element 2533, a second piston 2534, and a second ejector 2535.

Also referring to FIG. 5, when assembling the injection molding machine 200, the fixed mold 213 of the first mold assembly 21 is aligned with and fixed to the first surface 2511 of the main body 251 of the mold ejection device 25. The moving mold 211 of the first mold assembly 21 is mounted to and matches with the fixed mold 213 of the first mold assembly 21, thereby forming the mold cavity 215 together. The two first ejection mechanisms 252 of the mold ejection device 25 align with the mold cavity 215 correspondingly. The fixed mold 233 of the second mold assembly 23 is then aligned with and fixed to the second surface 2513 of the main body 251. The moving mold 231 of the second mold assembly 23 is then mounted to and matches with the fixed mold 233 of the second mold assembly 23, thereby forming the mold cavity 235 together to finish the assembly of the injection molding machine 200. Correspondingly, the two second ejection mechanisms 253 of the mold ejection device 25 align with the mold cavity 235 of the second mold assembly 23.

It is to be understood that the oil pump 27 in the present embodiment can be omitted or replaced by other controlling devices to control the corresponding first and second mold ejection mechanisms 252, 253. Under this condition, the corresponding pipes 2518 and the oil pipes 28 can also be omitted.

It is to be understood, however, that even through numerous characteristics and advantages of the disclosure have been set forth in the foregoing description, together with details of the structure and function of the present disclosure, the disclosure is illustrative only, and changes may be made in detail, especially in matters of shape, size, and arrangement of parts within the principles of the present disclosure to the full extent indicated by the broad general meaning of the terms in which the appended claims are expressed.

## Claims

1. A mold ejection device, comprising:
a main body having a first surface and a second surface opposite to the first surface, the main body defining at least one first receiving recess in the first surface, and at least one second receiving recess in the second surface;
at least one first ejection mechanism assembled and received within the at least one first receiving recess, the at least one first ejection mechanism comprising a first piston slidably assembled within the at least one first receiving recess and a first ejector fixed to the first piston, a distal end of the first ejector facing toward and slidably passing through the first surface; and
at least one second ejection mechanism slidably assembled and received within the at least one second receiving recess, the at least one second ejection mechanism comprising a second piston slidably assembled within the at least one second receiving recess and a second ejector fixed to the second piston, a distal end of the second ejector facing toward and slidably passing through the second surface.

2. The mold ejection device of claim 1, wherein there are two first receiving recesses and two second receiving recesses spaced and defined in the first and second surfaces of the main body, respectively; there are two first ejection mechanisms and two second ejection mechanisms slidably assembled within the corresponding two first receiving recesses and the two second receiving recesses, respectively.

3. The mold ejection device of claims 1 or 2, wherein the at least one first receiving recess is substantially a stepped receiving hole defined in the first surface of the main body.

4. The mold ejection device of claim 3, wherein the at least one second receiving recess is substantially a stepped receiving hole defined in the second surface of the main body.

5. The mold ejection device of claim 4, wherein the at least one first receiving recess comprises a mounting hole recessed from the first surface and a receiving hole coaxially communicating with the mounting hole and disposed between the mounting hole and the second surface; the at least one first ejection mechanism further comprises a first sealing element hermetically assembled within the mounting hole, thereby forming a first seal cavity with the at least one first receiving recess; the first piston is slidably assembled within the first seal cavity along an axial direction of the receiving hole, and the distal end of the first ejector faces the first surface and slidably passes through the first sealing element.

6. The mold ejection device of claim 5, wherein the at least one second receiving recess has substantially the same shape as the at least one first receiving recess and is defined in the second surface of the main body and comprises a mounting hole and a receiving hole; the at least one second ejection mechanism further comprise a second sealing element hermetically assembled within the mounting hole of the at least one second receiving recess, thereby forming a second seal cavity with the second receiving recess; the second piston is slidably assembled within the second seal cavity along an axial direction of the receiving hole of the at least one second receiving recess, and the distal end of the second ejector faces the second surface and slidably passes through the second sealing element.

7. The mold ejection device of any preceding claim, wherein the main body defines a plurality of pipes arranged within the main body to communicate with the first and second receiving recesses, the mold ejection device further comprises an oil pump connected to the at least one first and the at least one second receiving recesses for supplying the oil under pressure to the first and second ejection mechanisms, thereby controlling the mold ejection device.

8. An injection molding machine, comprising:
a first mold assembly;
a second mold assembly;
a mold ejection device assembled and sandwiched between the first and second mold assemblies for ejecting one or more molded products; the mold ejection device comprising:
a main body having a first surface and an opposite second surface, the main body defining at least one first receiving recess in the first surface, and at least one second receiving recess in the second surface;
at least one first ejection mechanism assembled and received within the at least one first receiving recess; the first ejection mechanism comprising a first piston slidably assembled within the at least one first receiving recess and a first ejector fixed to the first piston, a distal end of the first ejector facing toward and slidably passing through the first surface; and
at least one second ejection mechanism slidably assembled and received within the at least one second receiving recess; the at least one second ejection mechanism comprising a second piston slidably assembled within the second receiving recess and a second ejector fixed to the second piston, a distal end of the second ejector facing toward and slidably passing through the second surface.

9. The injection molding machine of claim 8, wherein the first mold assembly comprises a moving mold and a fixed mold matching with the moving mold, the fixed mold is fixed to the first surface of the main body, the moving mold is mounted to and matches with the fixed mold, thereby forming a mold cavity together; the distal end of the first ejector faces the mold cavity of the first mold assembly.

10. The injection molding machine of claim 9, wherein the second mold assembly comprises a fixed mold fixed to the second surface of the main body and a moving mold mounted and matching with the fixed mold of the second mold assembly, thereby forming a mold cavity together; the distal end of the second ejector faces the mold cavity of the second mold assembly.

11. The injection molding machine of any of claims 8 to 10, wherein there are two first receiving recesses and two second receiving recesses respectively spaced and defined in the first and second surfaces of the main body; there are two first ejection mechanisms and two second ejection mechanisms respectively slidably assembled within the corresponding two first receiving recesses and the two second receiving recesses.

12. The injection molding machine of claims 10 or 11, wherein the at least one first receiving recess is substantially a stepped receiving hole defined in the first surface of the main body.

13. The injection molding machine of claim 12, wherein the at least one second receiving recess is substantially a stepped receiving hole defined in the second surface of the main body.

14. The injection molding machine of claim 13 wherein the at least one first receiving recess comprises a mounting hole recessed from the first surface and a receiving hole coaxially communicating with the mounting hole and disposed between the mounting hole and the second surface; the at least one first ejection mechanism further comprises a first sealing element hermetically assembled within the mounting hole, thereby forming a first seal cavity with the at least one first receiving recess; the first piston is slidably assembled within the first seal cavity along an axial direction of the receiving hole, and the distal end of the first ejector faces the first surface and slidably passes through first sealing element.

15. The injection molding machine of claim 14, wherein the at least one second receiving recess has substantially the same shape as the at least one first receiving recess, and is defined in the second surface of the main body and comprises a mounting hole and a receiving hole; the at least one second ejection mechanism further comprises a second sealing element hermetically assembled within the mounting hole of the at least one second receiving recess, thereby forming a second seal cavity with the at least one second receiving recess; the second piston is slidably assembled within the second seal cavity along an axial direction of the receiving hole of the at least one second receiving recess, and the distal end of the second ejector faces the second surface and slidably passes through the second sealing element.

16. The injection molding machine of any of claims 10 to 15, wherein the main body defines a plurality of pipes arranged within the main body to communicate with the at least one first and the at least one second receiving recesses, the mold ejection device further comprises an oil pump connected to the first and second receiving recesses for supplying the oil under pressure to the at least one first and the at least one second ejection mechanisms, thereby controlling the mold ejection device.
